Europäisches Patentamt

European Patent Office

Office européen des brevets

(11) Veröffentlichungsnummer: **0 152 009**
**B1**

(12) # EUROPÄISCHE PATENTSCHRIFT

(45) Veröffentlichungstag der Patentschrift:
09.08.89

(21) Anmeldenummer: 85100896.1

(22) Anmeldetag: 29.01.85

(51) Int. Cl.⁴: **B 65 D 47/04**, B 29 C 45/44

(54) Deckel einer Flüssigkeitspackung mit Verfahren und Vorrichtung zur Herstellung desselben.

(30) Priorität: 15.02.84 DE 3405253

(43) Veröffentlichungstag der Anmeldung:
21.08.85 Patentblatt 85/34

(45) Bekanntmachung des Hinweises auf die Patenterteilung: 09.08.89 Patentblatt 89/32

(84) Benannte Vertragsstaaten:
AT BE CH DE FR GB IT LI NL SE

(56) Entgegenhaltungen:
DE—A— 1 486 350
DE—A— 3 139 780
GB—A— 2 039 817
US—A— 3 737 066
US—A— 4 063 868

(73) Patentinhaber: Tetra Pak Finance & Trading S.A.
70, Avenue C.F. Ramuz
CH-1009 Pully-Lausanne (CH)

(72) Erfinder: Reil, Wilhelm
Altengassweg 16
D-6142 Bensheim 1 (DE)

(74) Vertreter: Weber, Dieter, Dr. et al
Dr. Dieter Weber und Dipl.-Phys. Klaus Seiffert Patentanwälte Gustav-Freytag-Strasse 25 Postfach 6145
D-6200 Wiesbaden 1 (DE)

EP 0 152 009 B1

## Beschreibung

Die Erfindung betrifft eine den Deckel einer Flüssigkeitspakkung bildende, im wesentlichen ebene Stirnwand aus thermoplastischem Kunststoff mit einer Ausgießeinrichtung, die innerhalb der Außenkontur der Packung angeordnet ist und aus einer einer Ausgießöffnung verschließenden Öffnungslasche mit Kragen und einem an letzterer befestigten Griff besteht, und mit einem zur äußeren Oberfläche der Deckelwandung versetzten und am Umfang des Deckels angeordneten Bund zur Anbringung an einer Seitenwand der Packung, wobei die Öffnungslasche über eine endlose, in einer zweiten inneren Ebene und im Abstand sowie parallel zur Oberfläche der Deckelwandung verlaufenden Schwächungslinie mit der Deckelwandungen verbunden ist und der Abstand zwischen den zwei Ebenen größer oder gleich der Höhe des aus der Schwächungslinie an der Öffnungslasche nach außen herausstehenden Kragens der Öffnungslasche ist.

Ein Deckel der vorbezeichneten Art ist ähnlich bereits aus der DE-A-1 486 350 bekannt. Dort handelt es sich um einen Eimerdeckel, der aus Kunststoff durch Spritzen hergestellt sein kann und auf den oberen Rand eines Eimers aufgeklemmt wird. Die Ausgießeinrichtung besteht aus einem Ausgießrohr, welches mittels eines balgförmigen Mantelteils an der Hauptdeckelwandung bewegbar angebracht ist. Die Ausgießeinrichtung wird durch Abreißen einer Verschlußkappe längs einer Schwächungslinie abgelöst, wobei der Benutzer eine über Versteifungsrippen befestigte Öse ergreifen und die Verschlußkappe vollständig abtrennen kann. Vor dem Abtrennen der Verschlußkappe muß der Benutzer das Ausgießrohr mit noch anhaftender Verschlußkappe unter Verformung des balgartigen Mantelteils nach außen so herausziehen, daß sowohl der obere Mantelteil als auch das Ausgießrohr und erst recht die Verschlußkappe aus der Außenkontur der Packung heraustehen.

Nach dem Abreißen der Verschlußkappe und Entleeren wenigstens eines Teils der Flüssigkeit aus dem Eimer kann der Benutzer die separate Verschlußkappe in um 180° umgekehrter Position wieder so auf das Ausgießrohr aufstülpen, daß eine Verschließmöglichkeit gegeben ist.

Ein Deckel der hiernach bekannten Art muß in einer ersten Stellung gespritzt, in eine zweite, nämlich die Transportposition nach innerhalb der Außenkontur der Packung eingefaltet und schließlich zum Benutzen wieder aus dieser Transportgestalt herausgezogen werden. Hierfür sind nicht nur herstellungstechnisch besondere Werkzeuge und mehrere Herstellungsschritte erforderlich, sondern der Benutzer braucht zum Öffnen eines solchen Deckels einen gewissen Kraftaufwand, um einerseits die Ausgießeinrichtung aus der Kontur der Packung herauszuziehen und andererseits die Verschlußkappe vollständig abzureißen. Außerdem hat das vollständige Trennen der Verschlußkappe von dem Deckel den Nachteil, daß die Kappe verlorengehen kann.

Die Erfindung betrifft auch ein Verfahren zur Herstellung des Deckels der eingangs genannten Art durch Spritzformen, bei welchem nach dem Spritzvorgang derart früh entformt wird, daß sich der Kunststoff noch im thermoplastischen Zustand befindet.

Aus der US-A-4 063 868 ist ebenfalls ein Verfahren zum Herstellen eines Kunststoffkörpers durch Spritzgießen bekannt. Bei diesem Verfahren sollen Hohlkörper hergestellt werden, die mindestens ein hinterschnittenes Teil derart haben, daß man eine Entformung des Spritzlings ansich nur mit komplizierten Formwerkzeugen durchführen kann. Hier wird vorgeschlagen, auf einem konisch sich verjüngenden Dorn, der sich mit einfachen Spritzwerkzeugen gut entformen läßt, zunächst einen Hohlkörper mit dicken Wandungen so zu spritzen, daß nach dem Spritzvorgang, wenn sich der Kunststoff noch im thermoplastischen Zustand befindet, bereits entformt und der Spritzling in ein weiteres Werkzeug transportiert wird, wo ihm durch Preßluft und/oder Vakuum innen bzw. außen eine andere Gestalt gegeben wird. Nachdem der Kunststoff dann erstarrt ist, kann die Hülle des zweiten Werkzeuges leicht geöffnet werden, und es ist auf diese Weise ein Hohlkörper geschaffen, der bezüglich der einzigen Eingangsöffnung in den Hohlraum hinein Hinterschneidungen hat, und die Spritz- und Formwerkzeuge können gleichwohl einfach ausgestaltet und abgenommen werden.

Der erfindungsgemäße Deckel ist aber nicht als Hohlkörper ausgebildet, und es soll auch keine Veränderung der Ausgestaltung des Deckels oder an ihm befestigter Teile durchgeführt werden, so daß der Fachmann aus diesem Dokument keine Anregung erhalten kann, wie ein aus einer Scheibe herausstehender Griff mit einfachen Spritzwerkzeugen hergestellt und dennoch so angebracht werden soll, daß er nicht aus der Außenkontur der Pakkung, insbesondere nicht aus der äußeren Oberfläche der oberen Deckelwandung heraussteht.

Der Erfindung liegt daher die Aufgabe zugrunde, die bislang bekannten Deckel und Herstellungsverfahren für diese wie auch die Vorrichtung zur Durchführung der Herstellungsverfahren zu verbessern, damit insbesondere ein Deckel für günstigen Transport mit einfachen Mitteln hergestellt werden kann, der eine gute Dichtigkeit der Öffnungsvorrichtung, eine leichte Öffnungs- und sogar eine Wiederverschließmöglichkeit hat.

Hinsichtlich des Deckels wird diese Aufgabe erfindungsgemäß dadurch gelöst, daß die Öffnungslasche über ein Scharnier an der Deckelwandung angebracht ist und daß der Übergang zwischen der äußeren Oberfläche und der inneren zweiten Ebene durch Schrägflächen vorgesehen ist, vorzugsweise zwei gegenüberliegende ebene Schrägflächen.

Der Deckel gemäß der Erfindung hat eine äußere Oberfläche der Deckelwandung, die in eine sogenannte gedachte äußere erste Ebene gelegt wird. Zwischen dieser Ebene, also der äußeren, deckelseitigen Oberfläche der Packung einerseits und der inneren zweiten Ebene andererseits, in welcher die Schwächungslinie verläuft, wird durch Schrägflächen ein Übergang geschaffen, wobei diese Schrägflächen vorzugsweise durch zwei gegenüberliegende ebene Flächenteile gebildet werden. Auf diese Weise ist ein balgförmiger Mantelteil ausgeschaltet, und weder der Hersteller noch der Endbenutzer müssen einen solchen, im allgemeinen kegelstumpfförmigen bekannten Deckel innerhalb der Außenkontur der Packung herein- oder aus dieser herausklappen. Diese, teilweise nicht unbeträchtliche Kräfte erfordernden Bewegungen werden durch den erfindungsgemäßen Aufbau mit Vorteil vermieden. Sowohl für den Hersteller als auch für den Endverbraucher ist die Benutzung bzw. das Öffnen des neuen Deckels besonders angenehm, denn es muß keine hochstehende Öffnungsvorrichtung innerhalb der Außenkontur der Packung hineingedrückt oder zum Öffnen herausgezogen werden. Bei dem erfindungsgemäß erstellten Deckel sind derartige Überlegungen und Manipulationen weder für den Transport noch zum Öffnen erforderlich.

Außerdem kann die Öffnungslasche nach dem erstmaligen Öffnen dadurch nicht mehr verlustig gehen, daß sie über ein Scharnier an der Deckelwandung angebracht ist.

Die neue Gestaltung des Deckels nach der Erfindung wirkt sich überdies besonders günstig auf die Vereinfachung der Herstellungswerkzeuge aus.

Vorteilhaft ist es gemäß der Erfindung weiterhin, wenn in Draufsicht die äußere Oberfläche die Schrägflächen und die Öffnungslasche U-förmig derart umgibt, daß das auslaufseitige spitze Ende der Öffnungslasche am Umfang des Deckels und zwischen den freien Enden des U liegt. In Draufsicht ist ein Deckel, der auf einen zylindermantelförmigen Tubus aufgespritzt wird, rund. Wenn der Hauptteil des Kreisumfanges dieses Deckels in der beschriebenen Weise von der U-förmig angeordneten ersten Ebene eingenommen wird, ergibt sich eine große Standfläche und damit eine gute Transportmöglichkeit der mit dem erfindungsgemäßen Deckel versehenen neuen Flüssigkeitspackung. In vorteilhafter Weise wird in der Mitte und nach einer Seite hin, nämlich zwischen den freien Schenkel des beschriebenen U, die Öffnungsvorrichtung angeordnet, für welche durch die beiden gegenüberliegenden Schrägflächen der Raum geschaffen wird. Wenn außerdem die Öffnungslasche ein spitzes Ende hat, kann auch ihr aus der zweiten inneren Ebene herausstehender Kragen entsprechend spitz ausgeformt werden, so daß sich hervorragende Ausgießeigenschaften ergeben. Über das spitze Ende sind ferner die Einreißkräfte günstig einleitbar.

Bei zweckmäßiger weiterer Ausgestaltung der Erfindung ist die Öffnungslasche in Draufsicht länglich ausgebildet und erstreckt sich vom Deckelumfang etwa bis in seine Mitte, wobei vorzugsweise das Scharnier der Öffnungslasche etwa in der äußeren ersten Ebene angebracht ist. Durch die parallel zueinanderliegenden und im Abstand angeordneten beiden Ebenen befindet sich die gesamte Öffnungsvorrichtung mit Öffnungslasche (und im Endzustand mit Grifflasche) im Bereich zwischen den beiden Ebenen, so daß der Deckel der fertigen und gefüllten Packung eine obere Planfläche bzw. äußere erste Ebene hat. Kein Teil der Öffnung ragt über diese Planfläche hinaus. Die Fläche zum Aufreißen wird durch die innere zweite Ebene gebildet.

Die in Draufsicht gesehen längliche Ausgestaltung der Öffnungslasche hat den Vorteil, daß beim Kippen der geöffneten Packung der Flüssigkeitsstrahl des Inhaltes zunächst auf der Seite mit der Spitze zu fließen beginnt, während im mittleren Bereich, der beim Kippen oben zu liegen kommt, das Einströmen der durch das Ausgießen des Packungsinhaltes erforderlichen Luft von außerhalb nach innerhalb der Packung erlaubt. Durch die Anordnung der Spitze der Öffnungslasche am Deckelumfang ist auch für ein rechtzeitiges Abreißen des Gießstrahles gesorgt, der sich nicht über einen Teil des Deckels ergießen muß.

Das Scharnier zwischen der Deckelwandung und der Öffnungslasche ist in zweckmäßiger Weise lang und flexibel ausgebildet, so daß der Öffnungs- und Wiederverschließvorgang für den Endverbraucher erleichtert ist. Außerdem dient beim Spritzvorgang der Kanal des Scharniers im Spritzwerkzeug als Fließkanal für den flüssigen Kunststoff von einem Volumen zum anderen. Je mehr Fließkanäle dieser Art vorhanden sind, welche beispielsweise die schmale Abreißkante am Kragenrand der Öffnungslasche überbrücken, um so schneller und besser kann der Spritzvorgang durchgeführt werden.

Zweckmäßig ist es erfindungsgemäß auch, wenn der Umfang des Deckels neben dem spitzen Ende der Öffnungslasche auf der Höhe der inneren zweiten Ebene unter Bildung einer spitzen Gießtülle einen radial vorstehenden Vorsprung aufweist. Das vorstehend bereits angesprochene Abreißen des Gießstrahles wird durch diesen radial aus dem Deckelumfang an einer Stelle nach außen herausstehenden Vorsprung erheblich begünstigt. Ein Gießstrahl löst sich bekanntlich von einem spitzen Ende bzw. einem Vorsprung erheblich leichter als von einer geraden oder nur schwach gekrümmten Kante. Der Deckelumfang stellt eine nur schwach gekrümmte Kante dar, so daß an der einen Stelle ein spitzer Vorsprung das Gießen erheblich verbessert; wobei die Werkzeuge und Maßnahmen für diese Verbesserung sehr einfach und deshalb außerordentlich bevorzugt sind.

Wenn bei einer weiteren vorteilhaften Ausgestaltung des Deckels der von der Schwächungslinie der zweiten inneren Ebene teilweise nach innen stehende Kragen der Öffnungslasche an seinem Außenumfang kegelförmig ausgebildet ist, dann ergibt sich für diesen Kragen die Form eines Einführkegels. Nach dem Hochreißen der Öffnungslasche und Abschluß des Ausgießvorganges kann zum Wiederverschließen die Öffnungslasche über diesen Einführkegel sehr bequem in die durch das Aufreißen entstandene Öffnung hineingeführt und dort durch Einschnappen angeheftet werden.

Es ist erfindungsgemäß weiterhin sehr günstig, wenn der von der Schwächungslinie aus der zweiten inneren Ebene nach außen hochstehende Teil des Kragens der Öffnungslasche kegelförmig ausgebildet ist mit nach außen und oben zur ebenen Wandung der Öffnungslasche hin zunehmendem Maß und wenn zwischen der ebenen Wandung der Öffnungslasche und dem oberen Ende des außen kegelförmigen Kragens eine Hinterschneidung angebracht ist. Diese Maßnahmen dienen dem zweckmäßigen Wiederverschluß. Der erstgenannte, nach außen hochstehende, kegelförmige Kragen der Öffnungslasche bietet beim Wiederverschließen einen geringfügigen Widerstand, der für den Schnappeffekt und ein günstiges Anheften beim Wiederverschließen vorteilhaft ist. Besonders wirkt sich dies durch die zuletzt beschriebene Hinterschneidung zwischen der ebenen Wandung der Öffnungslasche und dem oberen Ende des außen kegelförmigen Kragens aus. Die endlose Abreißkante der Öffnung wird nämlich nach Überwinden dieses kegelförmigen äußeren Kragens in diese Hinterschneidung einschnappen und dort festgehalten.

Zusätzlich wird das Wiederverschließen begünstigt, wenn erfindungsgemäß die Wandung der Öffnungslasche unter Bildung einer Verschlußstütze radial nach außen einen vorstehenden Rand aufweist. Öffnungsvorrichtungen sind besonders zweckmäßig, wenn der Endverbraucher keine Anweisungen zu lesen und keine Überlegungen anzustellen braucht. Bei der erfindungsgemäßen Öffnungsvorrichtung wird der Endverbraucher die Grifflasche ergreifen und daran ziehen. Durch die spitze Ausgestaltung der Öffnungslasche an einer Seite werden die Zugkräfte dort besonders stark eingeleitet, so daß das Aufreißen an der Spitze beginnt und sich bei weiterem Zug zur Mitte, d. h. zum gegenüberliegenden Ende der Öffnungslasche hin fortsetzt. Nach dem Öffnen und Ausgießen kann der Benutzer dann die Öffnungslasche mit Hilfe des erwähnten Einführkegels wieder in das Loch einführen und den Einschnappeffekt besonders dadurch ausnutzen, daß er die ebene obere Wandung der Öffnungslasche ohne besondere Achtsamkeit in die Öffnung hineindrückt. Durch den vorstehenden Rand wird eine Verschlußstütze gebildet, die praktisch am ganzen Umfang der Öffnungslasche angeordnet ist, so daß der Benutzer mit dem Finger zum Einschnappen beliebig auf die Öffnungslasche aufdrücken kann, bis der Wiederverschluß in der gewünschten Weise durch das hörbare Schnappen erreicht ist.

Das Verfahren zur Herstellung des Deckels, wie er eingangs beschrieben ist, ist erfindungsgemäß dadurch gekennzeichnet, daß nach dem Spritzvorgang derart früh entformt wird, daß sich der Kunststoff noch im thermoplastischen Zustand befindet, der Deckel auf dem Formteil gehalten wird und die senkrecht aus der Hauptebene des Deckels hochstehende Grifflasche um etwa 90° umgelegt wird und in dieser Lage aushärtet. Es ist verschiedentlich von einfachen Werkzeugen und einem einfachen Herstellungsverfahren die Rede. Wenn lediglich zwei Außenformteile zum Anspritzen des Deckels gemäß der Erfindung benutzt werden, wird die Grifflasche zweckmäßig in einer zur Hauptebene des Deckels senkrechten Ebene gespritzt, in welcher die Grifflasche dann aber um ein erhebliches Maß aus der äußeren Kontur, d. h. aus der äußeren oberen Ebene der Packung heraussteht; eine Form, die für den Transport unerwünscht ist. Das Anspritzen einer Grifflasche im umgelegten Zustand bedingt aber zusätzliche Schieber im Formteil, wodurch dieses in nachteiliger Weise kompliziert würde.

Wendet man nun das erfindungsgemäße Verfahren an, daß nämlich die Grifflasche in vertikaler Position senkrecht zur äußeren ersten Ebene angespritzt, dann aber sehr früh, wenn das Kunststoffmaterial auch plastisch ist, entformt wird, kann man den dann freien Rohling durch einen Andrücker umgestalten. Ein in irgendeiner Weise ausgestalteter oder betätigter Andrücker legt erfindungsgemäß die Grifflasche um etwa 90° in den Raum zwischen den beiden erwähnten Ebenen des Deckels um, wobei lediglich auf den Fuß der Grifflasche ein entsprechender Druck auszuüben ist. Wenn dieses Andrükken schnell genug nach dem Entformen und vor dem Stabilisieren bzw. Aushärten des Kunststoffes erfolgt, ist die gewünschte Außenkontur auf sehr einfache Weise und zuverlässig gewährleistet.

Erfindungsgemäß ist auch eine Vorrichtung vorgesehen zur Herstellung des Deckels der eingangs bezeichneten Art, wobei mit der Vorrichtung der Deckel an einem Abschnitt aus flexiblem, bahnförmigem Material anspritzbar ist und die Vorrichtung mit einem Kern und einem zweiteiligen Außenformteil versehen ist, dessen zwei Formteile um eine Drehachse schwenkbar sind. Eingangs wurde bereits auf die bekannte Ausführungsform einer solchen Vorrichtung hingewiesen, wobei die erfindungsgemäß gewünschten Vorteile allerdings erst dann erreicht werden, wenn erfindungsgemäß vorgesehen wird, daß die Formteile nur eine gemeinsame Trennebene haben, in welcher die Form für die Grifflasche gebildet ist.

Diejenige Ebene jedes Außenformteiles, welche mit der Ebene des gegenüberliegenden Außenformteiles in Berührung kommt, bildet damit die Trennehene, die zwischen sich das Volumen für die Grifflasche vorsehen. Wenn mit einem solchen besonders einfachen Werkzeug die Grifflasche dann senkrecht aus der Hauptebene des Deckels heraussteht, kann dieser Nachteil doch durch den oben beschriebenen Verfahrensschritt des Umlegens der Grifflasche im thermoplastischen Zustand ausgeglichen werden. Es ist dann ein besonders einfaches Werkzeug einsetzbar, und dennoch sind die erfindungsgemäßen Ziele erreicht.

Bei weiterer vorteilhafter Ausgestaltung der Erfindung ist ein getrennt angeordneter und synchron gesteuerter Druckkolben zum Umlegen der noch teilweise plastischen Greiflasche nach innerhalb der Außenkontur innerhalb der ersten äußeren Ebene in Arbeitsrichtung hinter der Gesamtspritzeinheit vorgesehen. Das Andrücken kann zwar durch beliebige Einrichtungen und gegebenenfalls auch von Hand erfolgen, zweckmäßig ist aber die Anbringung eines Druckkolbens, der getrennt von der Ausformstation und der Gesamtspritzeinheit angeordnet und synchron gesteuert ist. Beispielsweise kann pneumatisch ein Kolben den Druckkolben betätigen, so daß mit sehr einfachen Mitteln das Andrücken durchgeführt werden kann.

Die im Zusammenhang mit dem Wiederverschließen vorstehend beschriebene Wirkung des Einschnappens wird weiterhin zusätzlich zu der Hinterschneidung und der Verschlußstütze noch weiter dadurch begünstigt, daß längs der Schwächungslinie nach dem Öffnen eine zickzackförmige Aufreißkante gebildet ist. Die Zickzackform ergibt sich beim Aufreißen durch teilweises Ausdehnen des Kunststoffes im Bereich der Schwächungslinie, so daß in Ergänzung der Wirkung der Hinterschneidung zusätzlich eine teilweise Verkleinerung der Öffnung selbst gegenüber der Öffnungslasche mit ihrem Kragen erreicht wird. Der Wiederverschluß wird dadurch mit Vorteil fester und nicht nur gegen Staub sondern teilweise sogar fast gegen Herausschwappen flüssigkeitsdicht, soweit man nach dem Wiederverschluß überhaupt von Flüssigkeitsdichtigkeit sprechen kann.

Interessant für das Verfahren und die Vorrichtung zur Herstellung des erfindungsgemäßen Deckels ist auch eine Überlegung, daß beispielsweise die Grifflasche lediglich mit Restwärme angespritzt werden kann. Die Grifflasche ist durch die beiden Außenformteile sehr flach ausbildbar und kann gegebenenfalls aus einem Zugring bestehen, für dessen Erstellung nicht eine zusätzliche, besonders hohe Wärmeenergiezufuhr notwendig ist. Dadurch kann schneller entformt und die Leistung der Gesamtmaschine gesteigert werden.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen :

Figur 1 eine Schnittansicht durch den Deckel unmittelbar nach dem Entformen, ohne Werkzeug mit hochstehender Grifflasche,

Figur 2 eine Draufsicht auf den Deckel der Figur 1, teilweise abgebrochen,

Figur 3 eine Schnittansicht entlang der Linie III-III in Figur 2,

Figur 4 eine Vergrößerung des Ausschnittes IV in Figur 3,

Figur 5 einen ähnlichen Ausschnitt wie Figur 4, jedoch nach Öffnen und Wiederverschließen,

Figur 6 eine schematische Teildarstellung des Druckkolbens bei der Herstellungsvorrichtung mit Antrieb vor dem Umlegen,

Figur 7 die gleiche Darstellung noch weiter abgebrochen im Zustand beim Umlegen und

Figur 8 nochmals den Druckkolben der Herstellungsvorrichtung in der Stellung wie bei Figur 6, jedoch nach dem Umlegen der Grifflasche.

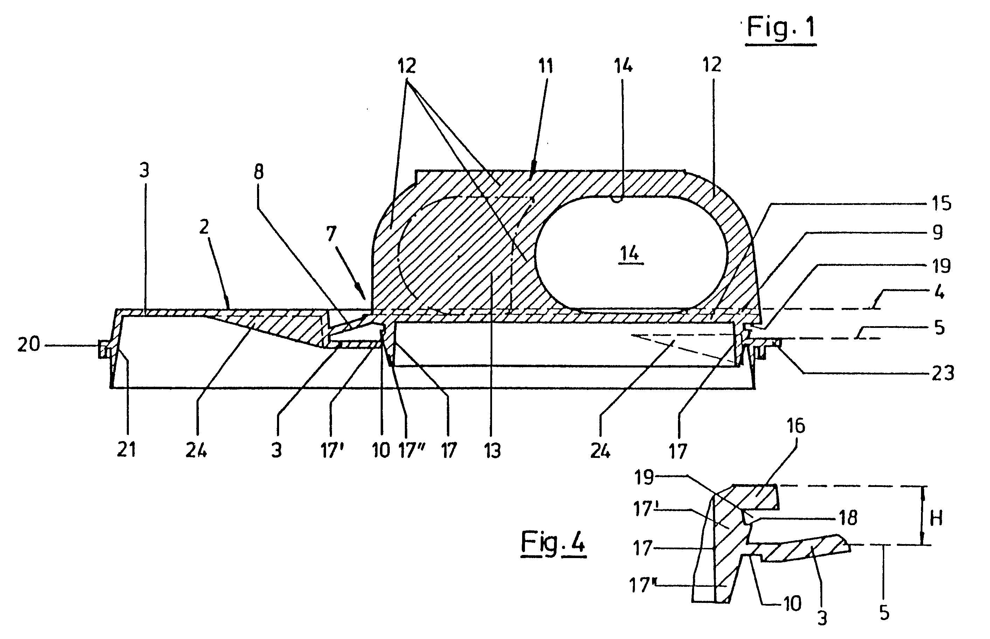

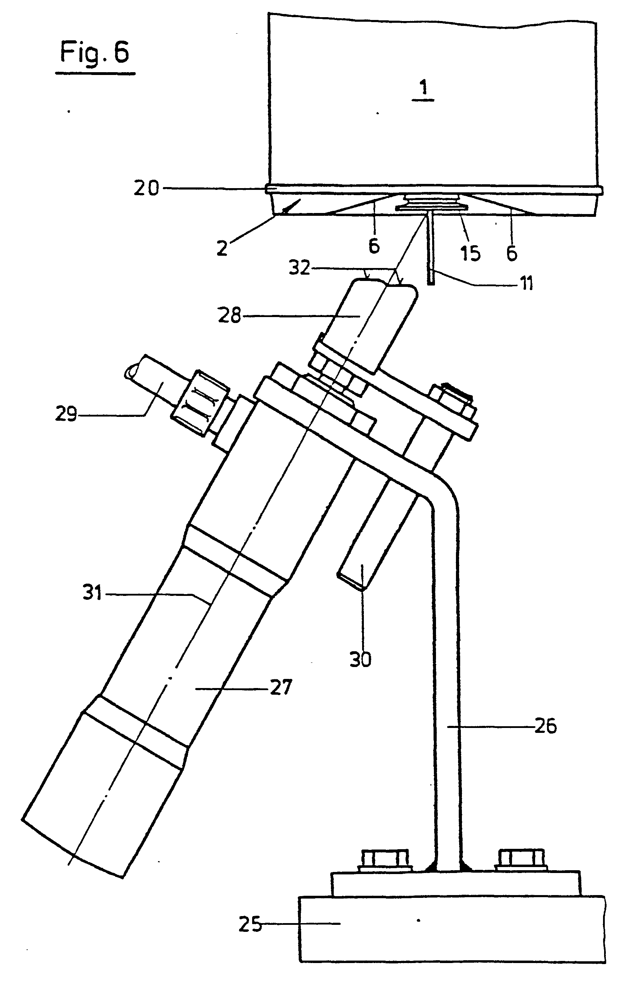

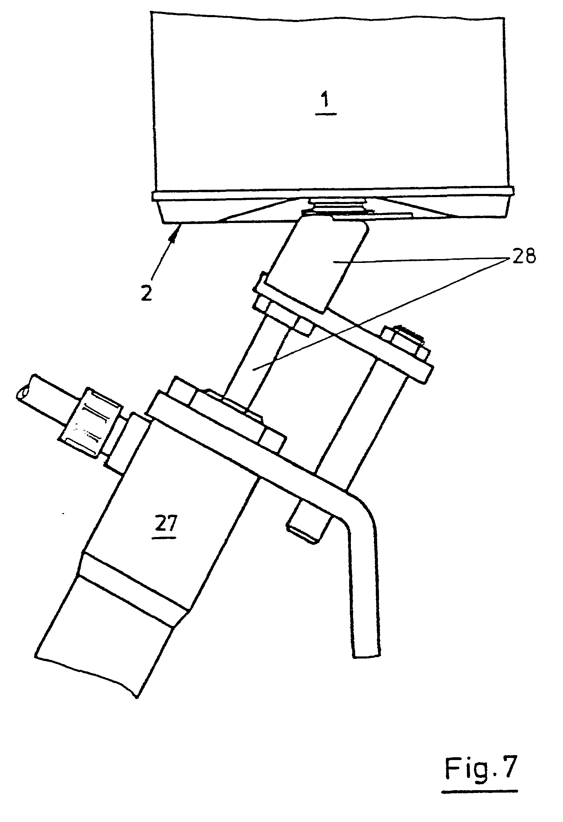

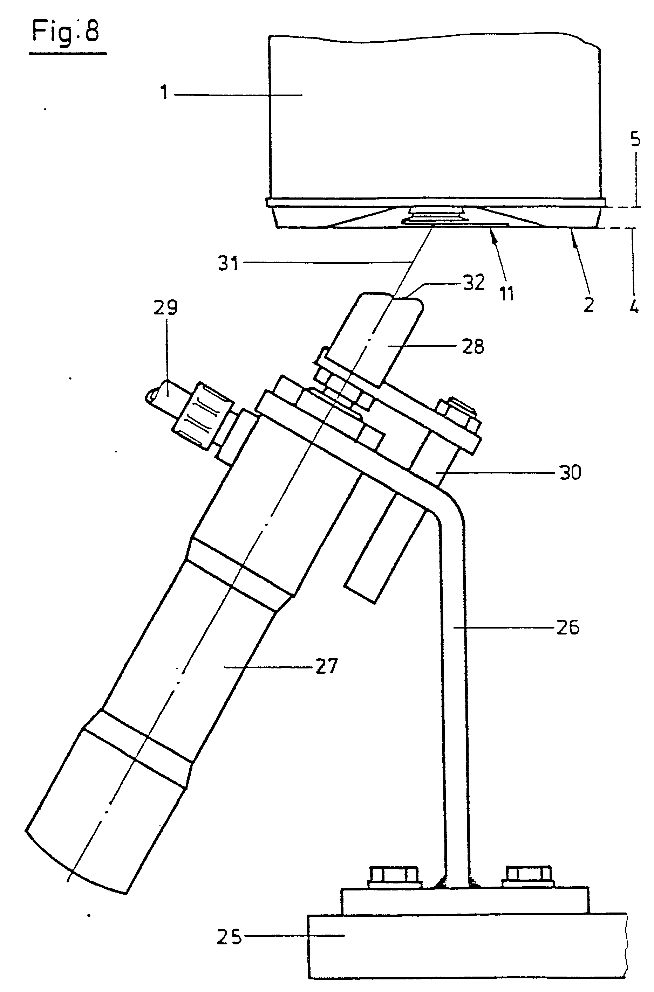

Von der nicht dargestellten Flüssigkeitspackung ist in den Figuren 6 bis 8 der zylindermantelförmige Tubus 1 der Seitenwandungen dargestellt, an dessen einem kreisförmigen Ende der allgemein mit 2 bezeichnete Deckel als ebene Stirnwand der Flüssigkeitspackung angespritzt ist. Dieser Deckel selbst ist in den Figuren 1 bis 3 ohne Packung und ohne Werkzeug in verschiedenen Ansichten gezeigt. Die Deckelwandung 3 liegt sowohl in einer äußeren ersten Ebene 4 als auch in einer inneren zweiten Ebene 5, wobei der Übergang zwischen diesen durch Schrägflächen 6 erfolgt. Die allgemein mit 7 bezeichnete Ausgießöffnung besteht aus einer an einem Scharnier 8 angebrachten Öffnungslasche 9, die über eine endlose Schwächungslinie 10 mit der in der inneren zweiten Ebene 5 liegenden Deckelwandung 3 verbunden ist. Eine Grifflasche 11 ist bei der Darstellung der Figuren 1 bis 3 und 6 in der Spritzposition gezeigt, in der die Grifflasche 11 senkrecht zu den parallelen Ebenen 4 und 5 liegt. In den Figuren 7 und 8 ist der um etwa 90° umgelegte Zustand der Grifflasche 11 gezeigt, in welcher diese innerhalb der Außenkontur der Packung, d. h. innerhalb der äußeren ersten Ebene 4 liegt. Die Grifflasche ist aus Zug- und Verbindungsösen 12, die auch als Fließ- oder Einspritzkanäle bei dem Spritzvorgang dienen, einer Füllhaut 13 und einer Greiföffnung 14 gebildet.

Der Fuß der Grifflasche 11 ist an der ebenen Wandung 15 der Öffnungslasche 9 angeformt, wobei nach außen zur Bildung einer Verschlußstütze ein Rand 16 vorsteht.

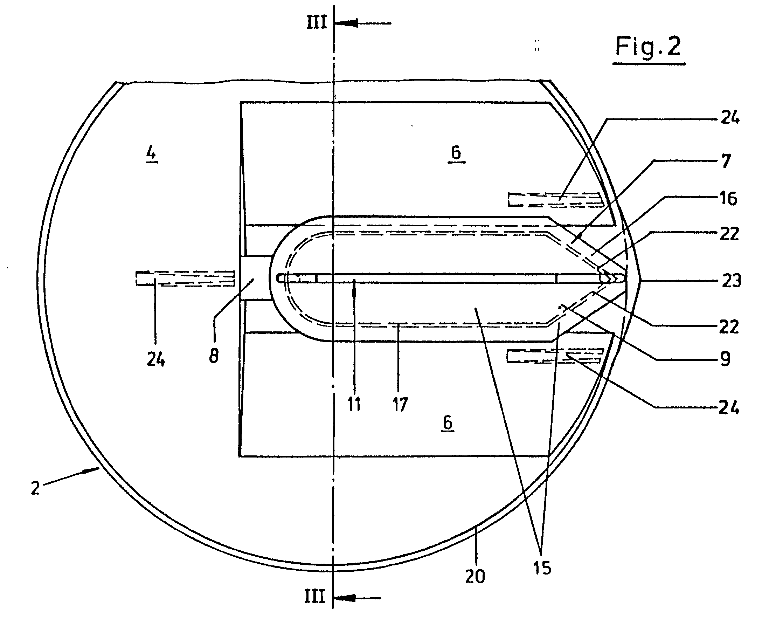

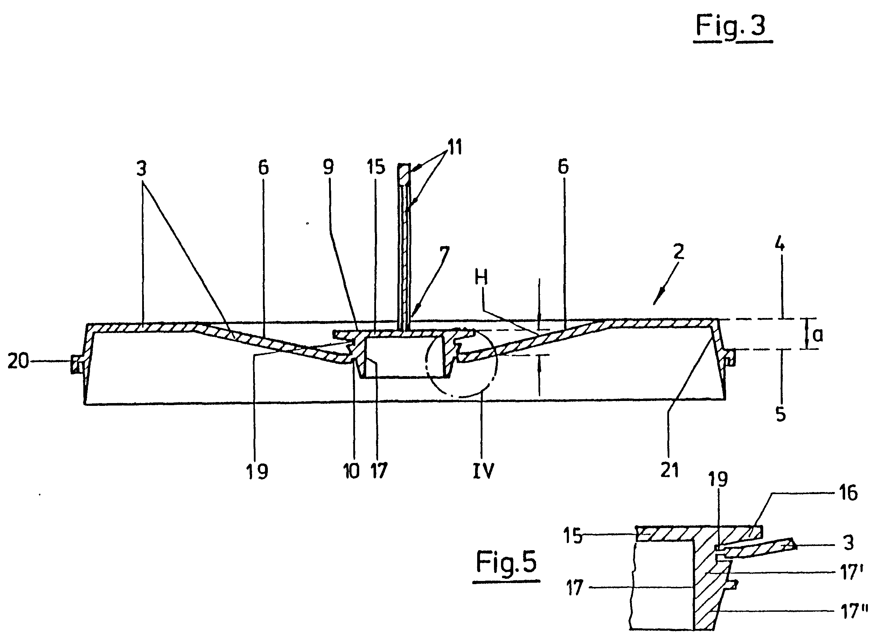

Die Öffnungslasche 9 ist länglich, wobei die lange Seite in den Figuren 1 und 2 und die schmale Seite in Ansicht quer dazu in Figur 3 dargestellt sind. Von der ebenen Wandung 15 der Öffnungslasche 9 steht nach unten ein Kragen 17 heraus, der ein oberes Teil 17' aufweist, das nach außen aus der zweiten inneren Ebene 5 mit oben zur ebenen Wandung 15 der Öffnungslasche 9 hin in zunehmendem Maß ebenso kegelförmig ausgebildet ist wie der untere Teil 17", der sich unter die innere zweite Ebene 5 weiter nach innen zur Innenseite der geschlossenen Packung kegelförmig erstreckt. Zwischen dem oberen Teil 17' und dem unteren Teil 17" des Kragens 17 liegt die Schwächungslinie 10, wie deutlich in Figur 4 erkennbar ist. Zwischen der ebenen Wandung 15 der Öffnungslasche 9 und dem oberen Ende 18 des außen kegelförmigen Kragens 17 liegt eine Hinterschneidung 19.

In Figur 5 ist gezeigt, wie die Deckelwandung 3 in diese Hinterschneidung 19 eingeschnappt und über den nach außen ragenden Kegel des oberen Teiles 17' des Kragens 17 in diesem eingerasteten Zustand gehalten wird.

Der Deckel 2 weist an seinem Umfang außen einen Bund 20 auf, der die freie Schnittkante des Tubus 1 aufnimmt und so übergreift, damit das Kunststoffmaterial des Deckels 2 wenigstens im Randbereich beide gegenüberliegenden und mit Kunststoff beschichteten Außenseiten des beschichteten Tubusmaterials berührt und in diesem Bereich auf den beiden Außenbeschichtungen verankert ist. Die bei 21 dargestellte Konusform des Deckelrandes dient dem leichteren Entformen.

Aus den Figuren 1 und 3 erkennt man deutlich, daß der Abstand a zwischen der ersten äußeren Ebene 4 und der zweiten inneren Ebene 5 größer als die Höhe H des aus der Schwächungslinie 10 an der Öffnungslasche 9 nach außen heraustehenden oberen Teils 17' des Kragens 17 der Öffnungslasche 9 ist.

Aus Figur 2 geht deutlich hervor, wie die äußere erste Ebene 4 die Schrägflächen 6 und die Öffnungslasche 9 U-förmig umgibt, wobei die beiden freien Schenkel des U in Figur 2 rechts angeordnet sind. Dort befindet sich auch die Spitze der Öffnungslasche 9, an welcher die Zugöse 12 angesetzt ist und beim Öffnen das Abreißen über die Abreißkanten 22 beginnt.

Im Bereich des Deckelumfanges und in der Höhe der inneren zweiten Ebene 5 ist in Figur 2 der radial vorstehende Vorsprung 23 gezeigt (siehe auch in Figur 1 rechts), welcher als spitze Gießtülle wirkt.

Einige für die Erfindung nicht wesentliche Versteifungsrippen 24 sind an verschiedenen Stellen veranschaulicht.

Hinsichtlich der Vorrichtung zur Herstellung eines Deckels nach den Figuren 1 bis 5 wird auf die bereits erwähnte DE-OS 32 07 701 und dort insbesondere auf Figur 4 verwiesen. Um eine Achse wird ein Dornrad gedreht, dessen jeweils in der oberen Position befindlicher Dorn in der Gesamtspritzeinheit angeordnet ist. In dieser Position sind über zwei Arme, die um die genannten parallel zueinander und horizontal liegenden Achsen schwenken, die Außenformteile, das obere freie Ende des Dornes umschließend vorgesehen. Zum Entformen drehen die beiden Stützarme um die Achsen nach außen, wodurch der Drehweg für die Bewegung des Dornes freigegeben ist. Sogleich nach dem Weiterdrehen des Dornrades um einen bestimmten Winkelabstand ist die in den Figuren 6 bis 8 gezeigte Position des soeben entformten Deckels 2 erreicht. An dem in den Figuren 6 bis 8 abgebrochen gezeigten Rahmenteil 25 ist über eine Halterung 26 ein Druckzylinder 27 mit Druckkolben 28 befestigt und wird über hydraulische oder pneumatische Leitungen 29 angetrieben. Eine Führungsstange 30 sorgt für eine exakte Führung des Druckkolbens 28 in Richtung der strichpunktiert gezeigten Achse 31. Aus den Figuren 6 bis 8 erkennt man ferner die konturierte Oberfläche 32 des Druckkolbens 28, die eine schräge Oberfläche für die flächige Anlage an die ebene Wandung 15 der Öffnungslasche 9 erlaubt. Außerdem ist die äußere und entsprechend schräg ausgestaltete Oberfläche 32 des Druckkolbens 28 mit einer Stufe versehen, in welcher die Grifflasche 11 für das Umlegen und im umgelegten Zustand gemäß Fig. 7 Platz findet.

Figur 6 ist der Anfangszustand, wenn der Deckel 2 und damit die Grifflasche 11 gerade entformt und der Kunststoff sich noch im plastifizierten Zustand befindet. Durch Beaufschlagung des Druckzylinders 27 über Leitung 29 wird der Druckkolben 28 in die in Figur 7 gezeigte Position herausgefahren und drückt dabei die Grifflasche 11 um etwa 90° um und innerhalb der Außenkontur der Packung. Während der Druckkolben 28 wieder zurückgezogen wird, so daß er den Zustand der Figur 8 erreicht, verbleibt die Grifflasche 11 in dem umgelegten Zustand, so daß in der äußeren ersten Ebene 4 die gewünschte Planfläche der Packung erreicht ist.

**Patentansprüche**

1. Den Deckel einer Flüssigkeitspackung bildende, im wesentlichen ebene Stirnwand aus thermoplastischem Kunststoff mit einer Ausgießeinrichtung, die innerhalb der Außenkontur der Packung angeordnet ist und aus einer eine Ausgießöffnung (7) verschließenden Öffnungslasche (9) mit Kragen (17) und einem an letzterer befestigten Griff (11) besteht und mit einem zur äußeren Oberfläche (4) der Deckelwandung (3) versetzten und am Umfang des Deckels angeordneten Bund (20) zur Anbringung an einer Seitenwand (1) der Packung, wobei die Öffnungslasche (9) über eine endlose, in einer zweiten inneren Ebene (5) und im Abstand (a) sowie parallel zur Oberfläche (4) der Deckelwandung (3) verlaufenden Schwächungslinie (10) mit der Deckelwandung (3) verbunden ist und der Abstand (a) zwischen den zwei Ebenen (4, 5) größer oder gleich der Höhe (H) des aus der Schwächungslinie (10) an der Öffnungslasche (9) nach außen herausstehenden Kragens (17) der Öffnungslasche (9) ist, dadurch gekennzeichnet, daß die Öffnungslasche (9) über ein Scharnier (8) an der Deckelwandung (3) angebracht ist und daß der Übergang zwischen der äußeren Oberfläche (4) und der inneren zweiten Ebene (5) durch Schrägflächen (6) vorgesehen ist, vorzugsweise zwei gegenüberliegende ebene Schrägflächen (6).

2. Deckel nach Anspruch 1, dadurch gekennzeichnet, daß in Draufsicht die äußere Oberfläche (4) die Schrägflächen (6) und die Öffnungslasche (9) U-förmig umgebend derart vorgesehen ist, daß das auslaufseitige spitze Ende der Öffnungslasche am Umfang des Deckels und zwischen den freien Enden des U liegt (Figur 2).

3. Deckel nach Anspruch 1 oder 2, dadurch gekennzeichnet, daß die Öffnungslasche (9) in Draufsicht länglich ausgebildet ist und sich vom Deckelumfang etwa bis in seine Mitte erstreckt, wobei vorzugsweise das Scharnier (8) der Öffnungslasche (9) etwa in der äußeren Oberfläche (4) angebracht ist.

4. Deckel nach einem der Ansprüche 1 bis 3, dadurch gekennzeichnet, daß der Umfang des Deckels (2) neben dem spitzen Ende (bei 16) der Öffnungslasche (9) auf der Höhe der inneren zweiten Ebene (5) unter Bildung einer spitzen Gießtülle einen radial vorstehenden Vorsprung (23) aufweist.

5. Deckel nach einem der Ansprüche 1 bis 4, dadurch gekennzeichnet, daß der von der Schwächungslinie (10) der zweiten inneren Ebene (5) teilweise nach innen stehende Kragen (17″) der Öffnungslasche (9) an seinem Außenumfang kegelförmig ausgebildet ist.

6. Deckel nach einem der Ansprüche 1 bis 5, dadurch gekennzeichnet, daß der von der Schwächungslinie (10) aus der zweiten inneren Ebene (5) nach außen hochstehende Teil (17′) des Kragens (17) der Öffnungslasche (9) kegelförmig ausgebildet ist mit nach außen und oben zur ebenen Wandung (15) der Öffnungslasche (9) hin zunehmendem Maß und daß zwischen der ebenen Wandung (15) der Öffnungslasche (9) und dem oberen Ende (18) des außen kegelförmigen Kragens (17) eine Hinterschneidung (19) angebracht ist.

7. Deckel nach einem der Ansprüche 1 bis 6, dadurch gekennzeichnet, daß die Wandung (15) der Öffnungslasche (9) unter Bildung einer Verschlußstütze radial nach außen einen vorstehenden Rand (16) aufweist.

8. Verfahren zur Herstellung des Deckels nach Anspruch 1 durch Spritzformen, bei welchem nach dem Spritzvorgang derart früh entformt wird, daß sich der Kunststoff noch im thermoplastischen Zustand befindet, dadurch gekennzeichnet, daß der Deckel (2) auf dem Formteil gehalten wird und die senkrecht aus der Hauptebene des Deckels hochstehende Grifflasche (11), vorzugsweise unter Ausüben von Druck auf den Fuß des Griffes (11), um etwa 90° umgelegt wird und in dieser Lage aushärtet, wonach auch der Deckel entformt wird.

9. Vorrichtung zur Herstellung des Deckels nach Anspruch 1, wobei mit der Vorrichtung der Deckel (2) an einen Abschnitt aus flexiblem, bahnförmigem Material anspritzbar ist, mit einem Kern und einem zweiteiligen Außenformteil, dessen zwei Formteile um eine Drehachse schwenkbar sind, dadurch gekennzeichnet, daß die Formteile nur eine gemeinsame Trennebene haben, in welcher die Form für die Grifflasche (11) gebildet ist, und daß ein getrennt angeordneter und synchron gesteuerter Druckkolben (28) zum Umlegen der noch teilweise plastischen Grifflasche (11) nach innerhalb der Außenkontur innerhalb der äußeren Oberfläche (4) in Arbeitsrichtung hinter der Gesamtspritzeinheit vorgesehen ist.

**Claims**

1. A substantially flat end wall, which forms the top of a liquid pack and which comprises thermoplastic material, with a pouring means which is arranged within the outside contour of the pack and comprises an opening flap (9) with collar (17), for closing a pouring opening (7), and a handle (11) secured to the opening flap (9), and with a shoulder (20) which is displaced with respect to the outer surface (4) of the wall (3) of the top and which is arranged at the periphery of the top, for mounting to a side wall (1) of the pack, wherein the opening flap (9) is connected to the wall (3) of the top by way of an endless weakening line (10) which extends in a second inner plane (5) and at a spacing (a) from and parallel to the surface (4) of the wall (3) of the top and the spacing (a) between the two planes (4, 5) is greater than or equal to the height (H) of the collar (17) of the opening flap (9), which collar projects outwardly out of the weakening line (10) at the opening flap (9), characterised in that the opening flap (9) is mounted to the wall (3) of the top by way of a hinge (8) and that the junction between the outer surface (4) and the inner second plane (5) is provided by inclined surfaces (6), preferably two oppositely disposed flat inclined surfaces (6).

2. A top according to claim 1 characterised in that in plan view the outer surface (4), surrounding the inclined surfaces (6) and the opening flap (9) in a U-shape, is provided in such a way that the pointed outlet end of the opening flap is disposed at the periphery of the top and between the free ends of the U (Figure 2).

3. A top according to claim 1 or claim 2 characterised in that in plan view the opening flap (9) is of an elongate configuration and extends from the periphery of the top approximately to the centre thereof, wherein preferably the hinge (8) of the opening flap (9) is disposed approximately in the outer surface (4).

4. A top according to one of claims 1 to 3 characterised in that beside the pointed end (at 16) of the opening flap (9) the periphery of the top (2) has a radially projecting projection (23), at the level of the inner second plane (5), forming a pointed pouring spout.

5. A top according to one of claims 1 to 4 characterised in that the collar (17″) of the opening flap (9), which partially projects inwardly from the weakening line (10) of the second inner plane (5), is of a conical configuration at its outer periphery.

6. A top according to one of claims 1 to 5 characterised in that the portion (17′) of the collar (17) of the opening flap (9), which portion stands up outwardly from the weakening line (10) of the second inner plane (5), is of a conical configuration, of a degree which increases outwardly and upwardly towards the flat wall (15) of the opening flap (9), and that an undercut configuration (19) is disposed between the flat wall (15) of the opening flap (9) and the upper end (18) of the externally conical collar (17).

7. A top according to one of claims 1 to 6 characterised in that the wall (15) of the opening flap (9) is provided radially outwardly with a projecting edge (16), forming a closure support.

8. A process for the production of the top according to claim 1 by injection moulding wherein after the injection moulding operation the moulded article is removed early from the mould in such a way that the plastics material is still in the thermoplastic condition characterised in that the top (2) is held on the mould portion and the gripping strip (11) which stands up vertically out of the main plane of the top is laid over through about 90°, preferably by applying pressure to the base of the gripping strip (11), and hardens in that position, whereupon the top is also removed from the mould.

9. Apparatus for the production of the top according to claim 1 wherein with the apparatus the top (2) can be injected on to a portion of flexible material in web form, with a core and a two-part outer mould portion, the two mould parts of which are pivotable about an axis of rotation, characterised in that the mould parts have only one common separation plane in which the mould for the gripping strip (11) is formed, and that a separately arranged and synchronously controlled pressure piston (28) for bending over the still partially plastic gripping strip (11) inwardly of the outside contour within the outer surface (4) is provided in the operating direction downstream of the overall injection unit.

## Revendications

1. Un couvercle d'emballage pour liquide constitué par une paroi frontale sensiblement plane en matière plastique thermoplastique, muni d'un dispositif verseur qui se trouve à l'intérieur du contour extérieur de l'emballage et qui est composé d'une patte d'ouverture (9), avec collerette (17) obturant une ouverture pour verser (7) et d'une poignée (11) fixée sur celle-ci, et comportant un rebord (20) décalé par rapport à la surface extérieure (4) de la paroi (3) du couvercle et disposé sur la périphérie du couvercle pour l'assemblage avec une paroi latérale (1) de l'emballage, la patte d'ouverture (9) étant reliée par l'intermédiaire d'une ligne d'affaiblissement sans fin (10) située dans un deuxième plan intérieur (5) et à une distance (a), parallèlement à la surface (4) de la paroi (3) du couvercle, la distance (a) entre les deux plans (4, 5) étant supérieure ou égale à la hauteur (H) de la collerette (17) de la patte d'ouverture (9) faisant saillie vers l'extérieur à partir de la ligne d'affaiblissement (10) sur la patte d'ouverture (9), caractérisé en ce que la patte d'ouverture (9) est disposée, par l'intermédiaire d'une charnière (8), sur la paroi (3) du couvercle et que la transition entre la face extérieure (4) et le deuxième plan intérieur (5) se fait par des surfaces inclinées (6), de préférence par deux surfaces inclinées (6) en opposition.

2. Couvercle selon la revendication 1, caractérisé en ce que vue en plan, la surface extérieure (4) entoure en forme de U les surfaces inclinées (6) et la patte d'ouverture (9), de telle sorte que l'extrémité en pointe du côté verseur de la patte d'ouverture se trouve sur la périphérie du couvercle et entre les branches libres du U (Fig. 2).

3. Couvercle selon la revendication 1 ou 2, caractérisé en ce que la patte d'ouverture (9) a une configuration allongée, vue en plan, et s'étend à partir de la périphérie du couvercle, sensiblement jusqu'à son centre, la charnière (8) de la patte d'ouverture (9) étant disposée sensiblement dans la première surface extérieure (4).

4. Couvercle selon l'une quelconque des revendications 1 à 3, caractérisé en ce que la périphérie du couvercle (2) présente une saillie (23) dépassant radialement, en forme de bec verseur en pointe au niveau du second plan intérieur (5), à côté de l'extrémité en pointe (vers 16) de la patte d'ouverture (9).

5. Couvercle selon l'une quelconque des revendications 1 à 4, caractérisé en ce que le col (17″) de la patte d'ouverture (9) qui fait partiellement saillie vers l'intérieur à partir de la ligne d'affaiblissement (10), présente au deuxième plan intérieur (5) une forme conique sur sa périphérie extérieure.

6. Couvercle selon l'une quelconque des revendications 1 à 5, caractérisé en ce que la partie (17″) du col (17) de la patte d'ouverture (9) faisant saillie vers l'extérieur présente, à partir de la ligne d'affaiblissement (10), au deuxième plan intérieur (5), une forme conique et a une dimension croissant vers l'extérieur et vers le haut en s'approchant de la paroi plane (15) de la patte d'ouverture (9) et en ce qu'une contre-dépouille (19) est ménagée entre la paroi plane (15) de la patte d'ouverture (9) et l'extrémité supérieure (18) du cône extérieur du col.

7. Couvercle selon l'une quelconque des revendications 1 à 6, caractérisé en ce que la paroi (15) de la patte d'ouverture (9) présente un bord (16) faisant saillie radialement en direction de l'extérieur et constituant un appui de fermeture.

8. Procédé de fabrication par injection du couvercle selon la revendication 1, dans lequel le démoulage est effectué immédiatement après l'opération d'injection, alors que la matière plastique se trouve encore à l'état thermoplastique, caractérisé en ce que l'on maintient le couvercle (2) sur l'élément de moule et que l'on rabat sur 90° environ la patte de prise (11) qui fait saillie verticalement par rapport au plan principal du couvercle, de préférence en exerçant une pression sur le pied de la poignée (11) et que l'on laisse durcir dans cette position, le couvercle étant ensuite démoulé.

9. Procédé de fabrication du couvercle selon la revendication 1, dans lequel le couvercle (2) peut être injecté sur une section d'un ruban flexible à l'aide d'un dispositif comportant un noyau et deux éléments extérieurs de moule, les deux éléments extérieurs du moule pouvant pivoter autour d'un axe de rotation, caractérisé en ce que les éléments du moule ne possèdent qu'un seul plan de séparation commun dans lequel il est pratiqué une empreinte pour la patte d'ouverture (11) et qu'il est prévu un piston de compression (28) agencé séparément et commandé en synchronisme pour rabattre la patte de prise (11) encore partiellement à l'état plastique vers l'intérieur de la périphérie extérieure et à l'intérieur de la surface extérieure (4), dans le sens de travail, en aval du groupe d'injection.

Fig. 1

Fig. 4

III

Fig. 2

4

6

24

7

16

22

23

22

9

24

8

8

24

11 17

6

2

20 15

III

EP 0 152 009 B1

2

**Fig.3**

**Fig.5**

Fig. 6

Fig.7

# Fig. 8